# EUROPEAN PATENT APPLICATION

(11) **EP 2 277 754 A1**
(43) Date of publication of application: **26.01.2011**
(21) Application number: 09731686.3
(22) Date of filing: 17.04.2009
(51) Int. Cl.: B60W 10/10, B60K 6/48, B60K 6/547, B60L 11/14, B60W 10/02, B60W 10/04, B60W 10/06, B60W 10/08, B60W 20/00, F02D 29/00, F02D 29/02, F16H 61/02, F16H 63/40, F16H 59/14, F16H 59/72, F16H 61/688

(54) **CONTROL SYSTEM FOR HYBRID POWER UNIT**

(30) Priority: 17.04.2008 JP 2008108199
(71) Applicant: AISIN AI Co., Ltd., Nishio-shi Aichi 445-0006 (JP); Toyota Jidosha Kabushiki Kaisha, Toyota-shi, Aichi 471-8571 (JP); Aisin Seiki Kabushiki Kaisha, Kariya-shi, Aichi 448-8650 (JP)
(72) Inventor: TANBA, Toshio, Nishio-shi Aichi 445-0006 (JP); FUKUHARA, Yuichi, Nishio-shi Aichi 445-0006 (JP); SASAKI, Kan, Nishio-shi Aichi 445-0006 (JP); SATO, Hiroshi, Toyota-shi Aichi 471-8571 (JP); OMURA, Masahiro, Kariya-shi Aichi 448-8650 (JP)
(74) Representative: Lacey, Dean Andrew
(86) International application number: PCT/JP2009/057762
(87) International publication number: WO 2009/128532

(57) **Abstract**

[Subject]

To rapidly rise a temperature of lubricant in a transmission housing of a hybrid drive power apparatus when the lubricant temperature is lower than a preset lower limit value.

[Solution]

A control system of a hybrid drive power apparatus of the type which comprises a transmission housing provided therein with a first input shaft to be applied with drive power from an engine through a first friction clutch and a second input shaft to be applied with the drive power of the engine through a second friction clutch, first and second gear-shift mechanisms respectively assembled with the first and second input shafts, a final output shaft in drive connection with each output shaft of the gear-shift mechanisms, a motor-generator in drive connection with the first input shaft or the second input shaft, and a driven mechanism in drive connection with the final output shaft, wherein the control system includes a temperature sensor for detecting a temperature of lubricant stored in the transmission housing, and control means for selecting a shift-step in the first or second gear-shift mechanism assembled with the input shaft in drive connection with the motor-generator when the lubricant temperature detected by the sensor is lower than a preset lower limit value so that drive torque, larger than that required for driving the driven mechanism is transferred to the final output shaft, for activating the motor-generator as an electric motor after selection of the shift-step , and for engaging the first or second friction clutch so that the drive torque of the engine is transferred to the final output shaft through a gear set at the selected shift-step in the first or second gear-shift mechanism.

## Description

### Field of the Invention:

The present invention relates to a hybrid drive power apparatus, particularly to a control system of a hybrid drive power apparatus suitable for applied to a power transmission of the dual-clutch type for rapidly warming lubricant in the transmission housing when the lubricant temperature is low.

### Discussion of the Prior Art:

Disclosed in Japanese Patent Laid-open Publication No. 2005-186931 is a hybrid drive power apparatus equipped with a power transmission of this type. The hybrid drive power apparatus includes first and second input shafts arranged to be selectively rotated by drive power of an engine transmitted thereto through a dual-clutch, first and second gear-shift mechanisms respectively assembled with first and second output shafts in parallel with the first and second input shafts, and a motor-generator in drive connection with the second output shaft to be activated as an electric motor for driving a set of driven road wheels in drive connection to the first or second output shaft when supplied with electric power from a battery and to be activated as a generator for charging the battery when driven by the driven road wheels.

### SUMMARY OF THE INVENTION

### Problems to be solved:

In an automotive vehicle equipped with the hybrid drive power apparatus, when the temperature of lubricant in the transmission housing dropped during parking of the vehicle for a long time, stirring resistance of the lubricant increases due to high viscosity of the lubricant immediately after start of the vehicle, resulting in loss of the drive power and increase of fuel consumption.

### Solution of the problems:

An object of the present invention is directed to increase frictional heat of intermeshed change-speed gears in the gear-shift mechanism immediately after start of the vehicle thereby to rapidly rise the temperature of lubricant in the transmission housing for eliminating loss of drive power caused by viscosity of the lubricant.

According to the present invention, the object is accomplished by providing a control system of a hybrid drive power apparatus of the type which comprises a transmission housing provided therein with a first input shaft to be applied with drive power from an engine through a first friction clutch and a second input shaft to be applied with the drive power of the engine through a second friction clutch, first and second gear-shift mechanisms respectively assembled with the first and second input shafts, a final output shaft in drive connection with each output shaft of the gear-shift mechanisms, a motor-generator in drive connection with the first input shaft or the second input shaft, and a driven mechanism in drive connection with the final output shaft, wherein the control system comprises a temperature sensor for detecting a temperature of lubricant stored in the transmission housing, and control means for selecting a shift-step in the first or second gear-shift mechanism assembled with the input shaft in drive connection with the motor-generator when the lubricant temperature detected by the sensor is lower than a preset lower limit value so that drive torque larger than that required for driving the driven mechanism is transferred to the final output shaft, for activating the motor-generator as an electric motor after selection of the shift-step , and for engaging the first or second friction clutch so that the drive power of the engine is transferred to the final output shaft through a gear set at the selected shaft-step.

In a practical embodiment of the present invention, there is provided a control system of a hybrid drive power apparatus of the type which comprises a transmission housing provided therein with a first input shaft to be applied with drive power from an engine through a first friction clutch and a second input shaft to be applied with the drive power of the engine through a second friction clutch, first and second gear-shift mechanisms respectively assembled with the first and second input shafts, a final output shaft in drive connection with each output shaft of the gear-shift mechanisms, a motor-generator in drive connection with the first input shaft, and a driven mechanism in drive connection with the final output shaft, wherein the control system comprises a temperature sensor for detecting a temperature of lubricant stored in the transmission housing, and control means for selecting a shift-step in the first gear-shift mechanism when the lubricant temperature detected by the sensor is lower that a preset lower limit value so that drive torque larger than that required for driving the driven mechanism is transferred to the final output shaft, for activating the motor-generator as an electric motor after selection of the shift-step , and for engaging the second friction clutch so that the drive power of the engine is transferred to the final output shaft through a gear set at the shift-step selected in the second gear-shift mechanism.

In another practical embodiment of the present invention, there is provided a control system of a hybrid drive power apparatus of the type which comprises a transmission housing provided therein with a first input shaft to be applied with drive power from an engine through a first friction clutch and a second input shaft to be applied with the drive power of the engine through a second friction clutch, first and second gear-shift mechanisms respectively assembled with the first and second input shafts, a final output shaft in drive connection with each output shaft of the gear-shift mechanisms, a motor--generator in drive connection with the first input shaft, and a driven mechanism in drive connection with the final output shaft, wherein the control system comprises a temperature sensor for detecting a temperature of lubricant stored in the transmission housing, and control means for selecting a high-speed step in the first gear-shift mechanism when the lubricant temperature detected by the sensor is lower than a preset lower limit value so that drive torque larger than that required for driving the driven mechanism is transferred to the final output shaft, for activating the motor-generator as an electric motor after selection of the high-speed step, and for engaging the second friction clutch so that the drive power of the engine is transferred to the final output shaft through a gear set at the high-speed step selected in the second gear-shift mechanism.

With the control system of the hybrid drive power apparatus described above, when a temperature of lubricant stored in the transmission housing is lower than the lower limit value, a high-speed step is selected in the first or second gear-shift mechanism so that drive torque larger than that required for driving the driven mechanism is transferred to the final output shaft. In such an instance, a possibly small gear is driven as a driven gear of the gear set selected in accordance with the required drive torque. This is effective to increase frictional heat of intermeshed gears at the gear set so as to rapidly warm the lubricant of low temperature for eliminating loss of the drive power and for restraining increase of fuel consumption.

### BRIEF DESCRIPTION OF THE DRAWINGS

In the drawings;
Fig. 1 is a skeleton view schematically illustrating an embodiment of a hybrid drive power apparatus which is operated under control of a control system according to the present invention;
Fig. 2 is a flow chart of a control program executed by a controller shown in Fig. 1;
Fig. 3 is a skeleton view illustrating a transfer path of drive torque applied to a final output shaft when the temperature of lubricant in the transmission housing is lower than a preset lower limit value;
Fig. 4 is a skeleton view illustrating a transfer path of drive torque under normal control in the embodiment shown in Fig. 1;
Fig. 5 is a skeleton view illustrating another transfer path of drive torque applied to a final output shaft under normal control of the embodiment shown in Fig. 1; and
Fig. 6 is a skeleton view schematically illustrating another embodiment of a hybrid drive power apparatus which is operated under control of a control system according to the present invention.

### DESCRIPTION OF THE PREFERRED EMBODIMENT

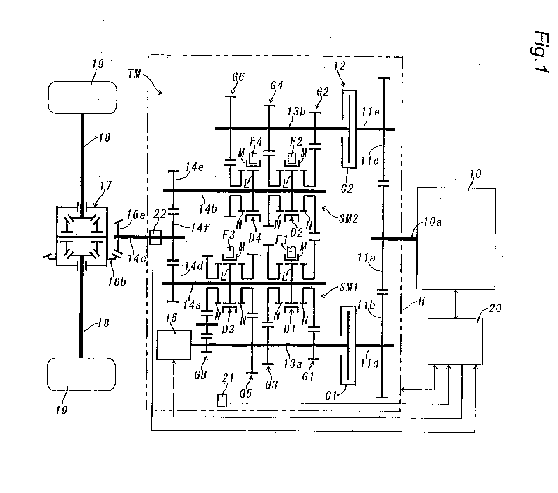

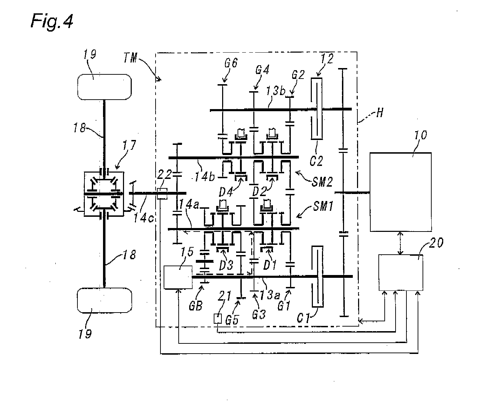

Hereinafter, an embodiment of a hybrid drive power apparatus according to the present invention will be described with reference to Figs. 1-4. In this embodiment, the hybrid drive power apparatus is adapted to an automatic power transmission TM of forward six speed steps and a backward step as shown in Fig. 1.

The automatic power transmission TM is in the form of a gear transmission of the dual-clutch type wherein a first input shaft 13a and a second input shaft 13b are rotatably mounted in parallel within a transmission housing H and drivingly connected to an output shaft 10a of an engine 10 through a first friction clutch C1 and a second friction clutch C2. An input member of first friction clutch C1 is connected to a support shaft 11d of a driven gear 11b in mesh with a drive gear 11a for rotation with the output shaft 10a of engine 10. Similarly, an input member of friction clutch C2 is connected to a support shaft 11e of a driven gear 11c in mesh with the drive gear 11a for rotation with the output shaft 10a of engine 10. A first output shaft 14a and a second output shaft 14b are arranged respectively in parallel with the input shafts 13a and 13b and drivingly connected to a final output shaft 14c through drive gears 14d and 14e in mesh with a driven gear 14f supported on the final output shaft 14c. The final output shaft 14c is drivingly connected to a set of driven road wheels 19 through a drive pinion 16a, a ring gear 16b, a differential gear 17 and a set of axle shafts 18.

The first and second friction clutches C1 and C2 in the form of a dual-clutch 12 are brought into half engagement in transit of changeover of a shift step for change-speed to increase or decrease transfer torque relatively in reverse in a normal condition. After changeover of the shift step for change-speed, the dual-clutch 12 is operated under control of a controller 20 as described later so that one of the friction clutches is completely engaged to maximize the transfer torque, while the other friction clutch is completely disengaged to render the transfer torque zero (0).

A first gear-shift mechanism SM1 is provided between first input shaft 13a and first output shaft 14a, and a second gear-shift mechanism SM2 is provided between second input shaft 13b and second output shaft 14b. The first gear-shift mechanism SM1 includes gear sets G1, G3, G5 for first, third and fifth speed steps (odd steps for change-speed) and a reverse gear train GB for backward. Each drive gear of gear sets G1, G3, G5 and reverse gear train GB is fixedly supported on the first input shaft 13a for rotation therewith, and each driven gear of the gear sets and reverse gear train is rotatably supported on the first output shaft 14a. A first changeover clutch D1 is provided between the driven gear of first speed gear set G1 and the driven gear of third speed gear set G3 for selective connection with the first output shaft 14a. A third changeover clutch D3 is provided between the driven gear of fifth speed gear set G5 and the driven gear of reverse gear train GB for selective connection with the first output shaft 14a. An idle gear is interposed between the drive and driven gears of reverse drive train GB.

The second gear-shift mechanism SM2 includes gear sets G2, G4, G6 for second, fourth and sixth speed steps (even steps for change-speed). Each drive gear of the gear sets G2, G4, G6 is fixedly supported on the second input shaft 13b for rotation therewith, and each driven gear of the gear sets is rotatably supported on the second output shaft 14b. A second changeover clutch D2 is provided between the driven gear of second speed gear set G2 and the driven gear of fourth speed gear set G4 for selective connection with the second output shaft 14b. A fourth changeover clutch D4 is provided at one side of the driven gear of sixth speed gear set G6 for selective connection with the second output shaft 14b.

The changeover clutches D1∼D4 each are in the form of a well known synchromesh mechanism which includes a clutch hub L respectively fixed to the first output shaft 14a and the second output shaft 14b and a shift sleeve (a shift member) M in splined engagement with the clutch hub. When shift forks F1∼F4 are selectively shifted in an axial direction, the shift sleeve M is engaged with a side gear of the driven gear for selective connection with the clutch hub L.

In the first embodiment, a control system of the hybrid drive power apparatus includes a temperature sensor 21 disposed in a lower portion of the transmission housing H for detecting a temperature of lubricant in the gear transmission TM and a torque sensor 22 mounted on the final output shaft 14c for detecting drive torque required for driving the driven road wheels 19.

A motor-generator 15 in drive connection with the first input shaft 13a is activated under control of the controller 20 as described below. In a condition where the vehicle is traveling at a low speed or the output power of engine 10 is not sufficient, the controller 20 supplies electric power to the motor-generator 15 from a battery (not shown) to activate the motor-generator as an electric motor and causes the engine 10 to cooperate with the motor-generator for driving the driven road wheels 19. In a condition where the engine 10 is driven by the driven road wheels 19 or the output power of engine 10 is sufficient, the motor-generator 15 is driven by the first input shaft 13b as a generator to charge the battery. Although in this embodiment, the motor-generator 15 is drivingly connected to the first input shaft 13a, the motor-generator 15 may be drivingly connected to the second output shaft 13b.

The controller in this embodiment includes a read-only memory (ROM) programmed to memorize rotation speed-torque characteristics (hereinafter called "motor-conversion output characteristics") in the form of a map indicative of measurement results of output torque transferred to the final output shaft 14c in accordance with a change-speed ratio of a gear set (the first speed, third speed or fifth speed gear set) selected in the first gear-shift mechanism when the motor-generator 15 is applied with maximum current to activate as an electric motor and to memorize rotation speed-torque characteristics (hereinafter called "engine-conversion output characteristics") in the form of a map indicative of measurement results of output torque transferred to the final output shaft in accordance with a change-speed ratio of a gear set (the second speed, fourth speed or sixth speed gear set) selected in the second gear-shift mechanism when the engine is operated. In operation of the hybrid drive power apparatus under control of the controller, the output torque of motor-generator 15 activated as the electric motor increases in a low speed range and decreases in accordance with increase of rotation speed, while the output torque of the engine increases in a medium speed range and decreases in a low speed range and a high speed range.

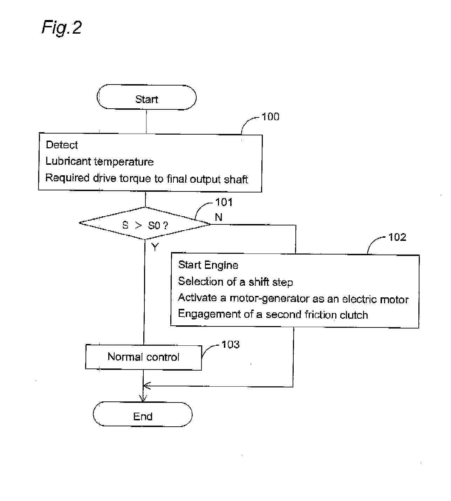

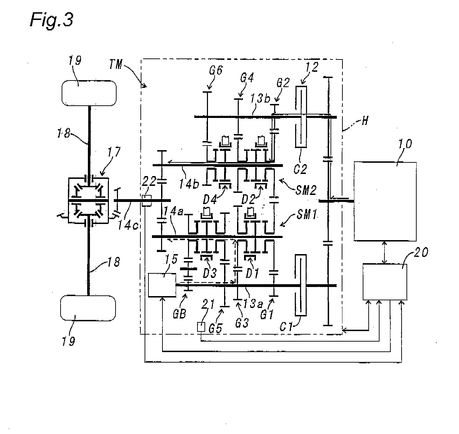

Hereinafter, operation of the gear transmission in the hybrid drive power apparatus will be described with reference to the control program shown in Fig. 2 and operation modes shown in Figs. 3-5. When connected to a source of electricity, the controller starts to execute processing of the control program shown in Fig, 2. At step 100, the controller 20 reads out a detection signal of the temperature sensor 21 to detect a temperature S of lubricant in the transmission housing H and reads out a detection signal of the torque sensor 22 to detect drive torque for driving the driven road wheels 19. When the temperature S of lubricant detected by sensor 21 drops less than the preset lower limit value SO due to lapse of a time in a stopped condition of the vehicle, the viscosity of lubricant increases. Accordingly, the lower limit value SO is determined in consideration with increase of viscous resistance caused by drop of the lubricant temperature. Thus, the controller 20 compares the detected temperature of lubricant with the lower limit value at step 101. If the answer at step 101 is "No", the controller causes the program to proceed to step 102

At step 102, the controller causes the first friction clutch C1 to bring into engagement and causes the motor-generator 15 to activate as an electric motor so that the engine is started by rotation of the first input shaft 13a. After start of the engine, the controller releases the engagement of first friction clutch C1.

In such a condition, the controller 20 causes the third changeover clutch D3 to bring into engagement for establishing a drive train of the fifth speed gear set G5 in the first gear-shift mechanism SM1 and causes the motor-generator 15 to activate as the electric motor. Thus, the driven road wheels 19 are driven by drive torque transferred from the motor-generator 15 at the change-speed ratio of the fifth gear set G5 selected in the first gear-shift mechanism SM1 to start the vehicle.

When the travel speed of the vehicle is increased by depression of an accelerator pedal after start of the vehicle, the drive torque required for driving the driven road wheels 19 becomes larger than that applied to the final output shaft 14c from the motor-generator 15 at the change-speed ratio of the fifth gear set G5. In such an instance, the controller 20 switches over the shift step for change-speed from the fifth speed to the third speed on a basis of the motor-conversion output characteristics memorized in its memory to increase drive torque transferred to the final output shaft 14c. When the travel speed of the vehicle is further increased by depression of the accelerator pedal, drive torque required for driving the driven road wheels 19 increases. In such a situation, the controller 20' causes the second changeover clutch D3 and the second friction clutch C2 to bring into engagement thereby to establish a drive train of the second speed gear set G2 (a lowest shift-step for change-speed) in the second gear-shift mechanism SM2. Thus, the drive torque of engine 10 transferred through the second friction clutch C2 is applied to the final output shaft 14c at the change-speed ratio of second speed gear set G2. In such a condition, as shown by a broken line and a solid line in Fig. 3, the driven road wheels 19 are driven by the drive torque transferred from the motor-generator 15 activated as the electric motor to the final output shaft 14c at the change-speed ratio of the third speed gear set G3 and the drive torque of engine 10 transferred to the final output shaft 14c at the change-speed ratio of second speed gear set G2 through the second friction clutch C2. When the travel speed of the vehicle is increased by depression of the accelerator pedal, the controller 20 detects drive torque required for driving the driven road wheels in response to a detection signal of torque sensor 22 and selects a shift-step optimal for applying the required drive torque to the final output shaft 14c in the first and second gear-shift mechanisms SM1 and SM2 on a basis of the motor-conversion output characteristics and the engine-conversion output characteristics.

Assuming that the temperature S of lubricant in the transmission housing H detected by sensor 21 at start of the vehicle is lower than the lower limit value SO as described above, the driven road wheels 19 are driven by the drive torque transferred from the motor-generator 15 activated as the electric motor to the final output shaft 14c at the change-speed ratio of the third speed gear set G5. When the vehicle starts to travel at a low speed, the driven road wheels 19 are driven by the drive torque of engine 10 transferred to the final output shaft 14c at the change-speed ratio of the second speed gear set G2 through the second friction clutch C2. As in such operation, a highest speed shift-step is respectively selected in the first and second gear-shift mechanisms SM1 and SM2 in a range wherein the final output shaft 14c is applied with drive torque larger than that required for driving the driven road wheels 19, a driven gear of possibly small diameter is driven in the gear set selected in accordance with the required drive torque. This causes an increase of friction heat of the intermeshed gears in the gear set, and the temperature of lubricant in the transmission housing is rapidly risen to decrease lose of the drive power and to restrain increase of the fuel consumption ratio.

Although in the foregoing control, the controller 20 is programmed to select a shift-step optimal for applying the required drive torque to the final output shaft 14c in the first gear-shift mechanism SM1 and the second gear-shift mechanism SM2 on a basis of the motor-conversion output characteristics and the engine-conversion output characteristics, a combination characteristic of the motor-conversion output characteristics and the engine-conversion output characteristics may be memorized in the controller 20 to select a shift-step optimal for applying the required drive torque to the final output shaft 14c in the first gear-shift mechanism SM1 and the second gear-shift mechanism SM2. Although in the embodiment, the drive torque required for driving the driven road wheels in accordance with the travel speed of the vehicle was detected by the torque sensor 22, the required torque is detected substantially in constant during travel of the vehicle on a flat road. Accordingly, the required drive torque to be applied to the final output shaft 14c may be calculated on a basis of the travel speed of the vehicle detected by a speed sensor.

When the lubricant temperature detected by the temperature sensor 21 during execution of the control program is higher than the lower limit value SO, the controller 20 determines a "Yes" answer at step 101 in Fig. 2 and causes the program to proceed to step 103. In processing at step 103, the controller 20 causes the shift sleeve M of first changeover clutch D1 to shift rightward for establishing a drive train of first speed gear set G1 in the first gear-shift mechanism SM1 and causes the motor-generator 15 to activate as an electric motor. With such control, the driven road wheels 19 are driven by a drive torque transferred from the motor-generator 15 at the change-speed ratio of first speed gear set G1 selected in the first gear-shift mechanism SM1 for movement of the vehicle. When the rotation speed of motor-generator 15 is increased by depression of the accelerator pedal to increase an input torque to the first input shaft 13a suitable for traveling the vehicle at the third speed, the controller 20 temporarily stops the supply of electric power to the motor-generator 15 and causes the shift sleeve M of first changeover clutch D1 to shift leftward for switching over from the first speed gear set D1 to the third speed gear set D3. Subsequently, the controller 20 causes the motor-generator 15 to activate as the electric motor.

When the vehicle speed increases suitable for traveling at the fifth speed, the controller 20 temporarily stops the supply of electric power to the motor-generator 15 and causes the first changeover clutch D1 in the first gear-shift mechanism SM to return to a neutral position. Thereafter, the controller 20 causes the shift sleeve M of the third changeover clutch D3 to shift leftward for switching over from the third speed gear set G1 to the fifth speed gear set G5. Subsequently, the controller 20 causes the motor-generator 15 to activate as the electric motor for traveling the vehicle. When the vehicle speed is increased by the drive torque of motor-generator 15 activated as the electric motor, the controller 20 causes the first friction clutch C1 to bring into engagement so that the engine 10 is started by rotation of the first input shaft 13a. Thereafter, the controller 20 stops the supply of electric power to the motor-generator 15 in a condition where the drive torque of engine 10 is transferred to the input shaft 13a through the first friction clutch C1. Subsequently, the controller 20 causes the shift sleeve of first changeover clutch D1 to shift rightward for engagement with the first speed gear set G1 so that the drive torque of engine 10 is transferred to the final output shaft 14c through the first friction clutch C1 and first input shaft 13a.

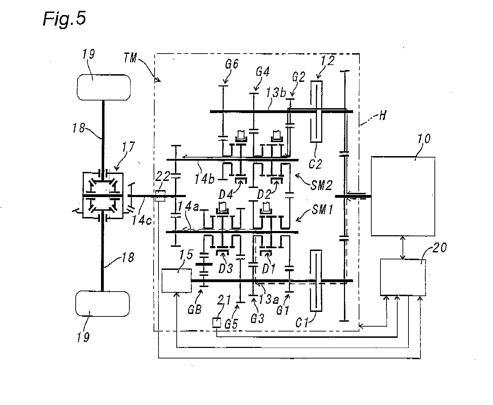

When the vehicle speed is increased by depression of the accelerator pedal suitable for traveling at the second speed, the controller 20 causes the shift sleeve of second changeover clutch D2 to shift rightward for engagement with the second speed gear set G2 and causes the second friction clutch C2 to bring into engagement. Subsequently, the controller 20 causes the shift sleeve of first changeover clutch D1 to return to the neutral position. With such control, the drive torque of engine 10 is transferred to the final output shaft 14c at the second speed ratio. (see an arrow of solid line in Fig. 5) As described above, the controller 20 causes each gear set in the first and second gear-shift mechanisms SM and SM2 to selectively bring into engagement in accordance with the travel condition of the vehicle and causes the first and second friction clutches C1 and C2 to alternately bring into engagement.

Shift down of the change-speed is controlled in reverse steps of the foregoing control. For backward movement of the vehicle, the shift sleeve of the third changeover clutch D3 is shifted leftward under control of the controller 20 to establish a backward drive train, and the first friction clutch C1 is gradually engaged in accordance with increase of the rotation speed of engine 10 caused by depression of the accelerator pedal. With such control, the drive torque of engine 10 is transferred to the final output shaft through the backward drive train to effect backward movement of the vehicle.

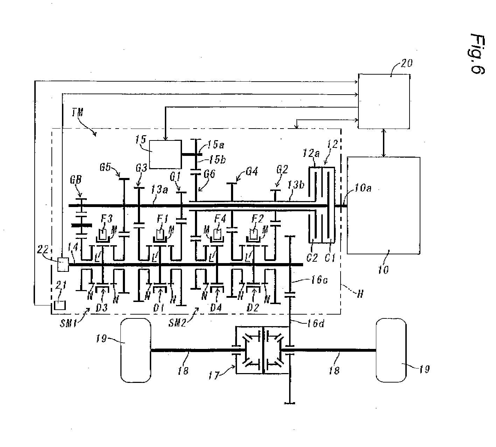

The present invention may be adapted to an automatic transmission TM of the dual clutch type shown in Fig. 6. In the automatic transmission, first and second input shafts 13a and 13b are coaxially arranged to be driven by engine 10 through a dual-clutch 12 composed of first and second friction clutches C1 and C2. The second input shaft 13b is in the form of a tubular shaft in surrounding relationship with first input shaft 13a. The three output shafts 14a, 14b, 14c in the gear transmission TM shown in Fig. 1 are in the form of a single output shaft 14 in parallel with the coaxial first and second input shafts 13a, 13b. A clutch cover 12a of dual-clutch 12 is connected to the output shaft 10a of engine 10 so that the first and second input shafts 13a and 13b are selectively driven by engine 10 through dual-clutch 12. The torque sensor 22 is mounted to the output shaft 14 that is drivingly connected to the driven road wheels 19 through final reduction gears 16c, 16d, differential gear set 17 and axle shafts 18, 18. A first gear-shift mechanism SM1 is arranged between rear half portions of first input shaft 13a and output shaft 14, and a second gear-shift mechanism SM2 is arranged between second input shaft 13b and output shaft 14. These gear-shift mechanisms SM1 and SM2 are substantially the same in construction as those in the first embodiment shown in Fig. 1. The motor-generator 15 is drivingly connected to the second input shaft 13b through a sixth speed gear set G6 in mesh with a gear 15b fixed to its output shaft 15a.

The function of the automatic transmission is substantially the same as that of the gear transmission shown in Fig. 1. When the lubricant temperature S detected by the temperature sensor 21 is lower than the preset lower limit value during processing of the control program shown in Fig. 2, the controller 20 selects each shift step in the first and second gear-shift mechanisms SM1 and SM2 on a basis of the motor-conversion output characteristics of motor-generator 15 and the engine-conversion output characteristics of engine 10. With such selection of the shift step, the drive torque of motor-generator 15 activated as the electric motor and the drive torque of engine 10 are applied to the final output shaft 14c as output torque larger than that required for driving the driven road wheels 19.

### DESCRIPTION OF REFERENCE NUMERALS

10...Engine, 12...Dual-clutch, 13a...First input shaft, 13b... Second input shaft, 14, 14a, 14b...Output shaft (First output shaft, Second output shaft), 15...Motor-generator, 19...Driven road wheels, 20...Controller, 21...Temperature sensor, 22...Torque sensor, C1...First friction clutch, C2...Second friction clutch, SM1...First gear-shift mechanism, SM2 ..Second gear-shift mechanisms.

## Claims

1. A control system of a hybrid drive power apparatus of the type which comprises a transmission housing provided therein with a first input shaft to be applied with drive power from an engine through a first friction clutch and a second input shaft to be applied with the drive power of the engine through a second friction clutch, first and second gear-shift mechanisms respectively assembled with the first and second input shafts, a final output shaft in drive connection with each output shaft of the gear-shift mechanisms, a motor-generator in drive connection with the first input shaft or the second input shaft, and a driven mechanism in drive connection with the final output shaft, wherein the control system comprises a temperature sensor for detecting a temperature of lubricant stored in the transmission housing, and control means for selecting a shift-step in the first or second gear-shift mechanism assembled with the input shaft in drive connection with the motor-generator when the lubricant temperature detected by the sensor is lower than a preset lower limit value so that drive torque larger than that required for driving the driven mechanism is transferred to the final output shaft, for activating the motor-generator as an electric motor after selection of the shift-step , and
for engaging the first or second friction clutch so that the drive torque of the engine is transferred to the final output shaft through a gear set at the selected shift-step in the first or second gear-shift mechanism.
